# EUROPEAN PATENT APPLICATION

(11) **EP 4 769 807 A1**
(43) Date of publication of application: **01.07.2026**
(21) Application number: 25797710.8
(22) Date of filing: 29.04.2025
(51) Int. Cl.: H01M 50/526, H01M 50/383, H01M 50/30, H01M 50/502

(54) **BATTERY CELL ASSEMBLY AND METHOD FOR MANUFACTURING SAME**

(30) Priority: 03.05.2024 KR 20240058898
(71) Applicant: LG Energy Solution, Ltd., Seoul 07335 (KR)
(72) Inventor: LEE, Jae Hyun, Daejeon 34122 (KR); SHIN, Ju Hwan, Daejeon 34122 (KR); LEE, Jae Hyun, Seoul 05854 (KR)
(74) Representative: Plasseraud IP
(86) International application number: PCT/KR2025/005777
(87) International publication number: WO 2025/230275

(57) **Abstract**

Embodiments of the present disclosure provide a battery cell assembly. The battery cell assembly includes a plurality of battery cells arranged in a first direction and each including an electrode lead, an integrated circuit assembly coupled to the electrode lead of each of the plurality of battery cells, and a foaming mesh between the integrated circuit assembly and the plurality of battery cells.

## Description

### [Technical Field]

The present disclosure relates to a battery cell assembly and a manufacturing method thereof. The present application claims the benefit of priority based on Korean Patent Application No. 10-2024-0058898, filed on May 3, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the stability of secondary batteries is increasing. A driver's life may be in danger when an accident such as fire occurs in a secondary battery used for mobility and thus research on technology for enhancing the stability of secondary batteries is indispensable.

### [Disclosure]

### [Technical Problem]

The present disclosure is directed to providing a battery cell assembly with improved safety and a manufacturing method thereof.

### [Technical Solution]

Embodiments of the present disclosure provide a battery cell assembly. The battery cell assembly includes a plurality of battery cells arranged in a first direction and each including an electrode lead, an integrated circuit assembly coupled to the electrode lead of each of the plurality of battery cells, and a foaming mesh interposed between the integrated circuit assembly and the plurality of battery cells.

The foaming mesh may include a mesh and a foaming coating applied to the mesh.

The foaming coating may be configured to form an insulating layer when a thermal runaway event occurs in the plurality of battery cells.

The integrated circuit assembly may include an insulating frame and an integrated circuit mounted on the insulating frame, and the foaming mesh may be coupled to the insulating frame.

The foaming mesh may be thermally fused to the insulating frame.

The insulating frame may include a first surface facing the plurality of battery cells, and the foaming mesh may be coupled to the first surface.

The insulating frame may include a plurality of first slits, and the foaming mesh may include second slits overlapping the plurality of first slits.

The electrode lead of each of the plurality of battery cells may pass through a corresponding one of the plurality of first and second slits.

The battery cell assembly may further include pads interposed between the plurality of battery cells, and the foaming mesh may overlap the pads in a second direction perpendicular to the first direction.

The foaming mesh may overlap some of the plurality of battery cells in the second direction.

The foaming mesh may overlap each of the plurality of battery cells in the second direction.

Embodiments provide a battery cell assembly. The battery cell assembly may include a plurality of battery cells arranged in a first direction and each including an electrode lead, an integrated circuit assembly coupled to the electrode lead of each of the plurality of battery cells, and a plurality of foaming meshes interposed between the integrated circuit assembly and the plurality of battery cells.

### [Advantageous Effects]

According to embodiments of the present disclosure, by adhering a foaming mesh to an integrated circuit assembly, it is possible to reduce a time required to apply a foaming coating to manufacture a battery cell assembly and to improve the productivity of the battery cell assembly.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view for describing a battery cell assembly according to embodiments.
FIGS. 2 and 3 are exploded perspective views for describing a battery cell assembly according to embodiments.
FIG. 4 is a plan view of a battery cell assembly according to embodiments.
FIG. 5 is a perspective view of an insulating frame and a foaming mesh according to embodiments.
FIG. 6 is a rear view of an insulating frame and a foaming mesh according to embodiments.
FIG. 7 is a flowchart of a method of providing a battery cell assembly according to embodiments.
FIG. 8 is a perspective view for describing a method of providing a battery cell assembly according to embodiments.
FIG. 9 is a cross-sectional view of a foaming mesh according to embodiments.
FIG. 10 is a perspective view of an insulating frame and foaming meshes according to embodiments.
FIG. 11 is a rear view of an insulating frame and foaming meshes according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts matching corresponding to the present disclosure on the basis of the principle that the inventor(s) of the application can appropriately define the terms or expressions to optimally explain the present disclosure.

Therefore, embodiments set forth herein and configurations illustrated in the drawings are only embodiments of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

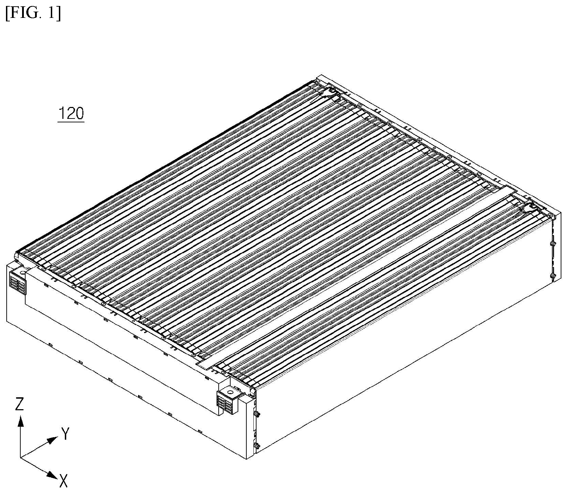

FIG. 1 is a perspective view for describing a battery cell assembly 120 according to embodiments.

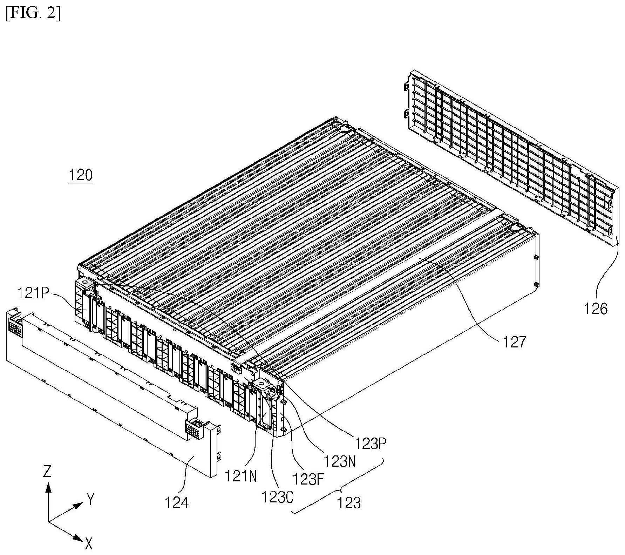

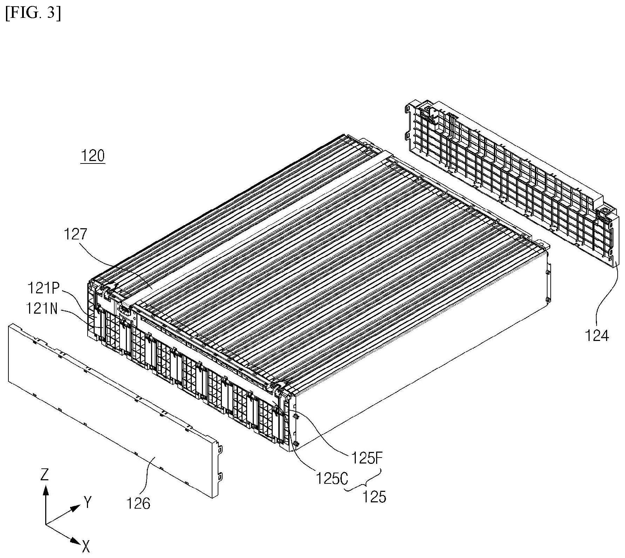

FIGS. 2 and 3 are perspective views for describing the battery cell assembly 120 according to embodiments. More specifically, FIGS. 2 and 3 are views of the battery cell assembly 120 in different directions.

Referring to FIGS. 1 to 5, the battery cell assembly 120 may include a plurality of battery cells 121_1, 121_2, 121_3, 121_4, 121_5, 121_6, 121_7, 121_8, 121_9, 121_10, 121_11, 121_12, 121_13, 121_14, 121_15 and 121_16 (hereinafter, 121_1 to 121_16), pads 122, a first integrated circuit assembly 123, a first insulating cover 124, a second integrated circuit assembly 125, a second insulating cover 126, a flat flexible cable (FFC) assembly 127, a fire-resistant sheet, and a top cover. The battery cell assembly 120 may not include a module frame.

The plurality of battery cells 121_1 to 121_16 may be lithium ion batteries. The plurality of battery cells 121_1 to 121_16 each include an electrode assembly, an electrolyte, and a cell case. The cell case may include an aluminum laminate sheet, a cylindrical metal can, a prismatic metal can or a combination thereof.

The electrode assembly included in the cell case includes a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

Each of the plurality of battery cells 121_1 to 121_16 may include a positive electrode lead 121P and a negative electrode lead 121N. The positive electrode lead 121P and the negative electrode lead 121N may be referred to together as electrode leads. That is, an electrode lead may be understood to indicate the positive electrode lead 121P and/or the negative electrode lead 121N. The positive electrode lead 121P may be coupled to negative electrode tabs of an electrode assembly by, for example, ultrasonic welding or the like. The negative electrode lead 121N may be coupled to negative electrode tabs of an electrode assembly by, for example, ultrasonic welding or the like.

The plurality of battery cells 121_1 to 121_16 may be arranged in the X-axis direction. Each of the plurality of battery cells 121_1 to 121_16 may be a bidirectional cell. Accordingly, the positive electrode lead 121P and the negative electrode lead 121N of each of the plurality of battery cells 121_1 to 121_16 may protrude from the cell case in opposite directions. The positive electrode lead 121P and the negative electrode lead 121N of each of the plurality of battery cells 121_1 to 121_16 may be spaced apart from each other in a Y-axis direction. The Y-axis direction may be substantially perpendicular to an X-axis direction.

Hereinafter, the technical idea of the present disclosure will be described with respect to an example in which each of the plurality of battery cells 121_1 to 121_16 is a bidirectional cell as described above. Technicians of ordinary skill in the art will be able to easily derive an embodiment in which each of the plurality of battery cells 121_1 to 121_6 is a unidirectional cell, based on the description herein.

The battery cells 121_1 may be connected to each other in parallel. The positive electrode leads 121P of the battery cells 121_1 may be short-circuited to each other. The positive electrode leads 121P of the battery cells 121_1 may be welded to each other. The negative electrode leads 121N of the battery cells 121_1 may be short-circuited to each other. The negative electrode leads 121N of the battery cells 121_1 may be welded to each other.

The battery cells 121_2 may be connected to each other in parallel. The positive electrode leads 121P of the battery cells 121_2 may be short-circuited to each other. The positive electrode leads 121P of the battery cells 121_2 may be welded to each other. The negative electrode leads 121N of the battery cells 121_2 may be short-circuited to each other. The negative electrode leads 121N of the battery cells 121_2 may be welded to each other. The battery cells 121_2 may form a second bank.

The battery cells 121_3 may be connected to each other in parallel. The positive electrode leads 121P of the battery cells 121_3 may be short-circuited to each other. The positive electrode leads 121P of the battery cells 121_3 may be welded to each other. The negative electrode leads 121N of the battery cells 121_3 may be short-circuited to each other. The negative electrode leads 121N of the battery cells 121_3 may be welded to each other. The battery cells 121_3 may form a third bank.

The battery cells 121_4 may be connected to each other in parallel. The positive electrode leads 121P of the battery cells 121_4 may be short-circuited to each other. The positive electrode leads 121P of the battery cells 121_4 may be welded to each other. The negative electrode leads 121N of the battery cells 121_4 may be short-circuited to each other. The negative electrode leads 121N of the battery cells 121_4 may be welded to each other. The battery cells 121_4 may form a fourth bank.

The battery cells 121_5 may be connected to each other in parallel. The positive electrode leads 121P of the battery cells 121_5 may be short-circuited to each other. The positive electrode leads 121P of the battery cells 121_5 may be welded to each other. The negative electrode leads 121N of the battery cells 121_5 may be short-circuited to each other. The negative electrode leads 121N of the battery cells 121_5 may be welded to each other. The battery cells 121_5 may form a fifth bank.

The battery cells 121_6 may be connected to each other in parallel. The positive electrode leads 121P of the battery cells 121_6 may be short-circuited to each other. The positive electrode leads 121P of the battery cells 121_6 may be welded to each other. The negative electrode leads 121N of the battery cells 121_6 may be short-circuited to each other. The negative electrode leads 121N of the battery cells 121_6 may be welded to each other. The battery cells 121_6 may form a sixth bank.

The battery cells 121_7 may be connected to each other in parallel. The positive electrode leads 121P of the battery cells 121_7 may be short-circuited to each other. The positive electrode leads 121P of the battery cells 121_7 may be welded to each other. The negative electrode leads 121N of the battery cells 121_7 may be short-circuited to each other. The negative electrode leads 121N of the battery cells 121_7 may be welded to each other. The battery cells 121_7 may form a seventh bank.

The battery cells 121_8 may be connected to each other in parallel. The positive electrode leads 121P of the battery cells 121_8 may be short-circuited to each other. The positive electrode leads 121P of the battery cells 121_8 may be welded to each other. The negative electrode leads 121N of the battery cells 121_8 may be short-circuited to each other. The negative electrode leads 121N of the battery cells 121_8 may be welded to each other. The battery cells 121_8 may form a eighth bank.

The battery cells 121_9 may be connected to each other in parallel. The positive electrode leads 121P of the battery cells 121_9 may be short-circuited to each other. The positive electrode leads 121P of the battery cells 121_9 may be welded to each other. The negative electrode leads 121N of the battery cells 121_9 may be short-circuited to each other. The negative electrode leads 121N of the battery cells 121_9 may be welded to each other. The battery cells 121_9 may form a ninth bank.

The battery cells 121_10 may be connected to each other in parallel. The positive electrode leads 121P of the battery cells 121_10 may be short-circuited to each other. The positive electrode leads 121P of the battery cells 121_10 may be welded to each other. The negative electrode leads 121N of the battery cells 121_10 may be short-circuited to each other. The negative electrode leads 121N of the battery cells 121_10 may be welded to each other. The battery cells 121_10 may form a tenth bank.

The battery cells 121_11 may be connected to each other in parallel. The positive electrode leads 121P of the battery cells 121_11 may be short-circuited to each other. The positive electrode leads 121P of the battery cells 121_11 may be welded to each other. The negative electrode leads 121N of the battery cells 121_11 may be welded to each other. The negative electrode leads 121N of the battery cells 121_11 may be welded to each other. The battery cells 121_11 may form an eleventh bank.

The battery cells 121_12 may be connected to each other in parallel. The positive electrode leads 121P of the battery cells 121_12 may be short-circuited to each other. The positive electrode leads 121P of the battery cells 121_12 may be welded to each other. The negative electrode leads 121N of the battery cells 121_12 may be short-circuited to each other. The negative electrode leads 121N of the battery cells 121_12 may be welded to each other. The battery cells 121_12 may form a twelfth bank.

The battery cells 121_13 may be connected to each other in parallel. The positive electrode leads 121P of the battery cells 121_13 may be short-circuited to each other. The positive electrode leads 121P of the battery cells 121_13 may be welded to each other. The negative electrode leads 121N of the battery cells 121_13 may be short-circuited to each other. The negative electrode leads 121N of the battery cells 121_13 may be welded to each other. The battery cells 121_13 may form a thirteenth bank.

The battery cells 121_14 may be connected to each other in parallel. The positive electrode leads 121P of the battery cells 121_14 may be short-circuited to each other. The positive electrode leads 121P of the battery cells 121_14 may be welded to each other. The negative electrode leads 121N of the battery cells 121_14 may be short-circuited to each other. The negative electrode leads 121N of the battery cells 121_14 may be welded to each other. The battery cells 121_14 may form a fourteenth bank.

The battery cells 121_15 may be connected to each other in parallel. The positive electrode leads 121P of the battery cells 121_15 may be short-circuited to each other. The positive electrode leads 121P of the battery cells 121_15 may be welded to each other. The negative electrode leads 121N of the battery cells 121_15 may be short-circuited to each other. The negative electrode leads 121N of the battery cells 121_15 may be welded to each other. The battery cells 121_15 may form a fifteenth bank.

The battery cells 121_16 may be connected to each other in parallel. The positive electrode leads 121P of the battery cells 121_16 may be short-circuited to each other. The positive electrode leads 121P of the battery cells 121_16 may be welded to each other. The negative electrode leads 121N of the battery cells 121_16 may be short-circuited to each other. The negative electrode leads 121N of the battery cells 121_16 may be welded to each other. The battery cells 121_16 may form a sixteenth bank.

The negative electrode leads 121N of the battery cells 121_1 of the first bank may be short-circuited to the positive electrode leads 121P of the battery cells 121_2 of the second bank. The negative electrode leads 121N of the battery cells 121_1 of the first bank may be welded to the positive electrode leads 121P of the battery cells 121_2 of the second bank.

The negative electrode leads 121N of the battery cells 121_2 of the second bank may be short-circuited to the positive electrode leads 121P of the battery cells 121_3 of the third bank. The negative electrode leads 121N of the battery cells 121_2 of the second bank may be welded to the positive electrode leads 121P of the battery cells 121_3 of the third bank.

The negative electrode leads 121N of the battery cells 121_3 of the third bank may be short-circuited to the positive electrode leads 121P of the battery cells 121_4 of the fourth bank. The negative electrode leads 121N of the battery cells 121_3 of the third bank may be welded to the positive electrode leads 121P of the battery cells 121_4 of the fourth bank.

The negative electrode leads 121N of the battery cells 121_4 of the fourth bank may be short-circuited to the positive electrode leads 121P of the battery cells 121_5 of the fifth bank. The negative electrode leads 121N of the battery cells 121_4 of the fourth bank may be welded to the positive electrode leads 121P of the battery cells 121_5 of the fifth bank.

The negative electrode leads 121N of the battery cells 121_5 of the fifth bank may be short-circuited to the positive electrode leads 121P of the battery cells 121_6 of the sixth bank. The negative electrode leads 121N of the battery cells 121_5 of the fifth bank may be welded to the positive electrode leads 121P of the battery cells 121_6 of the sixth bank.

The negative electrode leads 121N of the battery cells 121_6 of the sixth bank may be short-circuited to the positive electrode leads 121P of the battery cells 121_7 of the seventh bank. The negative electrode leads 121N of the battery cells 121_6 of the sixth bank may be welded to the positive electrode leads 121P of the battery cells 121_7 of the seventh bank.

The negative electrode leads 121N of the battery cells 121_7 of the seventh bank may be short-circuited to the positive electrode leads 121P of the battery cells 121_8 of the eighth bank. The negative electrode leads 121N of the battery cells 121_7 of the seventh bank may be welded to the positive electrode leads 121P of the battery cells 121_8 of the eighth bank.

The negative electrode leads 121N of the battery cells 121_8 of the eighth bank may be short-circuited to the positive electrode leads 121P of the battery cells 121_9 of the ninth bank. The negative electrode leads 121N of the battery cells 121_8 of the eighth bank may be welded to the positive electrode leads 121P of the battery cells 121_9 of the ninth bank.

The negative electrode leads 121N of the battery cells 121_9 of the ninth bank may be short-circuited to the positive electrode leads 121P of the battery cells 121_10 of the tenth bank. The negative electrode leads 121N of the battery cells 121_9 of the ninth bank may be welded to the positive electrode leads 121P of the battery cells 121_10 of the tenth bank.

The negative electrode leads 121N of the battery cells 121_10 of the tenth bank may be short-circuited to the positive electrode leads 121P of the battery cells 121_11 of the eleventh bank. The negative electrode leads 121N of the battery cells 121_10 of the tenth bank may be welded to the positive electrode leads 121P of the battery cells 121_11 of the eleventh bank.

The negative electrode leads 121N of the battery cells 121_11 of the eleventh bank may be short-circuited to the positive electrode leads 121P of the battery cells 121_12 of the twelfth bank. The negative electrode leads 121N of the battery cells 121_11 of the eleventh bank may be welded to the positive electrode leads 121P of the battery cells 121_12 of the twelfth bank.

The negative electrode leads 121N of the battery cells 121_12 of the twelfth bank may be short-circuited to the positive electrode leads 121P of the battery cells 121_13 of the thirteenth bank. The negative electrode leads 121N of the battery cells 121_12 of the twelfth bank may be welded to the positive electrode leads 121P of the battery cells 121_13 of the thirteenth bank.

The negative electrode leads 121N of the battery cells 121_13 of the thirteenth bank may be short-circuited to the positive electrode leads 121P of the battery cells 121_14 of the fourteenth bank. The negative electrode leads 121N of the battery cells 121_13 of the thirteenth bank may be welded to the positive electrode leads 121P of the battery cells 121_14 of the fourteenth bank.

The negative electrode leads 121N of the battery cells 121_14 of the fourteenth bank may be short-circuited to the positive electrode leads 121P of the battery cells 121_15 of the fifteenth bank. The negative electrode leads 121N of the battery cells 121_14 of the fourteenth bank may be welded to the positive electrode leads 121P of the battery cells 121_15 of the fifteenth bank.

The negative electrode leads 121N of the battery cells 121_15 of the fifteenth bank may be short-circuited to the positive electrode leads 121P of the battery cells 121_16 of the sixteenth bank. The negative electrode leads 121N of the battery cells 121_15 of the fifteenth bank may be welded to the positive electrode leads 121P of the battery cells 121_16 of the sixteenth bank.

Accordingly, the first to sixteenth banks may be connected in series. As described above, the battery cell assembly 120 may include sixteen banks each including three battery cells but is a non-limiting example and should not be understood as limiting the technical idea of the present disclosure in any sense. The number of battery cells connected to each other in parallel and the number of banks connected to each other in series may be changed according to a voltage and a current to be output.

The pads 122 may be interposed between the battery cells 121_2 and the battery cells 121_3, between the battery cells 121_4 and the battery cells 121_5, between the battery cells 121_6 and the battery cells 121_7, between the battery cells 121_8 and the battery cells 121_9, between the battery cells 121_10 and the battery cells 121_11, between the battery cells 121_12 and the battery cells 121_13, and between the battery cells 121_14 and the battery cells 121_15.

According to some embodiments, the pads 122 may include polyurethane. The pads 122 may have elasticity and thus may absorb the swelling of the plurality of battery cells 121_1 to 121_16 according to the use of the battery cell assembly 120.

According to other embodiments, the pads 122 may be thermal barriers. According to embodiments, each of the plurality of pads 122 may have a high melting temperature and a low thermal conductivity. When each of the plurality of pads 122 is a thermal barrier, each of the plurality of pads 122 may include a flame-retardant material such as ceramic or coated glass fiber. The first integrated circuit assembly 123 may be on a first side of the battery cell assembly 120. The first integrated circuit assembly 123 may be coupled to the first side of the battery cell assembly 120. The positive electrode lead 121P of each of the battery cells 121_1, 121_3, 121_5, 121_7, 121_9, 121_11, 121_13 and 121_15 and the negative electrode lead 121N of each of the battery cells 121_2, 121_4, 121_6, 121_8, 121_10, 121_12, 121_14 and 121_16 may be on the first side.

The first integrated circuit assembly 123 may include a first bus bar frame 123F, a first integrated circuit 123C, a first bus bar 123P, and a second bus bar 123N.

The first bus bar frame 123F may include an insulating material. The first bus bar frame 123F may support the first bus bar 123P, the second bus bar 123N, the positive electrode lead 121P of each of the battery cells 121_1, 121_3, 121_5, 121_7, 121_9, 121_11, 121_13 and 121_15, and the negative electrode lead 121N of each of the battery cells 121_2, 121_4, 121_6, 121_8, 121_10, 121_12, 121_14 and 121_16.

The first integrated circuit 123C may be mounted on the first bus bar frame 123F. The first integrated circuit 123C may be configured to collect voltages of a plurality of nodes composed of the plurality of battery cells 121_1 to 121_16. For example, the first integrated circuit 123C may include a plurality of sensing plates welded to the positive electrode lead 121P of each of the battery cells 121_1, 121_3, 121_5, 121_7, 121_9, 121_11, 121_13 and 121_15 and the negative electrode lead 121N of each of the battery cells 121_2, 121_4, 121_6, 121_8, 121_10, 121_12, 121_14 and 121_16. As another example, the first integrated circuit 123C may be connected to the positive electrode lead 121P of each of the battery cells 121_1, 121_3, 121_5, 121_7, 121_9, 121_11, 121_13, and 121_15 and the negative electrode lead 121N of each of the battery cells 121_2, 121_4, 121_6, 121_8, 121_10, 121_12, 121_14, and 121_16 through bonding wires.

The first bus bar 123P may be in contact with the positive electrode leads 121P of the battery cells 121_1. The first bus bar 123P may be welded to the positive electrode leads 121P of the battery cells 121_1. The second bus bar 123N may be in contact with the negative electrode leads 121N of the battery cells 121_16. The second bus bar 123N may be welded to the positive electrode leads 121N of the battery cells 121_16. Resulting voltages and currents may be output to the outside through the first and second bus bars 123P and 123N according to electrical connection of the plurality of battery cells 121_1 to 121_16.

The first insulating cover 124 may be coupled to the first integrated circuit assembly 123. The first insulating cover 124 may be mounted on the first bus bar frame 123F. The first insulating cover 124 may be coupled to the first bus bar frame 123F by interference fit.

The first insulating cover 124 may include an insulating material. The first insulating cover 124 may cover the positive electrode lead 121P of each of the battery cells 121_1, 121_3, 121_5, 121_7, 121_9, 121_11, 121_13 and 121_15 and the negative electrode lead 121N of each of the battery cells 121_2, 121_4, 121_6, 121_8, 121_10, 121_12, 121_14 and 121_16. The first insulating cover 124 may include slits exposing the first and second bus bars 123P and 123N. The first and second busbars 123P and 123N may be in contact with an inter-bus bar or the like through the slits of the first insulating cover 124.

The second integrated circuit assembly 125 may be on a second side of the battery cell assembly 120. The second side may be opposite to the first side. The second integrated circuit assembly 125 may be spaced apart from the first integrated circuit assembly 123 with the plurality of battery cells 121_1 to 121_6 therebetween. The second integrated circuit assembly 125 may be coupled to the second side of the battery cell assembly 120. The negative electrode lead 121N of each of the battery cells 121_1, 121_3, 121_5, 121_7, 121_9, 121_11, 121_13 and 121_15 and the positive electrode lead 121P of each of the battery cells 121_2, 121_4, 121_6, 121_8, 121_10, 121_12, 121_14 and 121_16 may be on the second side. The second integrated circuit assembly 125 may include a second bus bar frame 125F and a second integrated circuit 125C.

The second bus bar frame 125F may include an insulating material. The second bus bar frame 125F may support the negative electrode lead 121N of each of the battery cells 121_1, 121_3, 121_5, 121_7, 121_9, 121_11, 121_13, and 121_15 and the positive electrode 121P of each of the battery cells 121_2, 121_4, 121_6, 121_8, 121_10, 121_12, 121_14, and 121_16.

The second integrated circuit 125C may be mounted on the second bus bar frame 125F. The second integrated circuit 125C may be configured to collect voltages of a plurality of nodes composed of the plurality of battery cells 121_1 to 121_16. For example, the second integrated circuit 125C may include a plurality of sensing plates welded to the negative electrode lead 121N of each of the battery cells 121_1, 121_3, 121_5, 121_7, 121_9, 121_11, 121_13 and 121_15 and the positive electrode lead 121P of each of the battery cells 121_2, 121_4, 121_6, 121_8, 121_10, 121_12, 121_14 and 121_16. As another example, the first integrated circuit 123C may be connected to the negative electrode lead 121N of each of the battery cells 121_1, 121_3, 121_5, 121_7, 121_9, 121_11, 121_13, and 121_15 and the positive electrode lead 121P of each of the battery cells 121_2, 121_4, 121_6, 121_8, 121_10, 121_12, 121_14, and 121_16 through bonding wires.

The second insulating cover 126 may be coupled to the second integrated circuit assembly 125. The second insulating cover 126 may be mounted on the second bus bar frame 125F. The second insulating cover 126 may be coupled to the second bus bar frame 125F by interference fit. The second insulating cover 126 may include an insulating material. The second insulating cover 126 may include foaming fire-resistant paint. The second insulating cover 126 may cover the negative electrode lead 121N of each of the battery cells 121_1, 121_3, 121_5, 121_7, 121_9, 121_11, 121_13 and 121_15 and the positive electrode lead 121P of each of the battery cells 121_2, 121_4, 121_6, 121_8, 121_10, 121_12, 121_14 and 121_16.

The FFC assembly 127 may be on the battery cells 121_1 to 121_16. The FFC assembly 127 may have an approximate line shape. The FFC assembly 127 may connect the first integrated circuit 123C and the second integrated circuit 125C to each other. Voltages detected by the second integrated circuit may be transmitted to the first integrated circuit 123C through the FFC assembly 127.

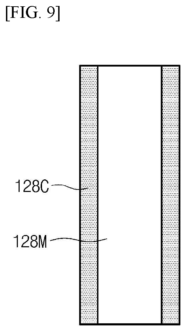

The foaming mesh 128 may be interposed between the plurality of battery cells 121 and a first insulating frame 123F. The foaming mesh 128 may include a foaming coating 128C (see FIG. 9), which foams when exposed to a high temperature, e.g., in a thermal runaway event. When a dry coating layer foams, an insulating layer (e.g., a carbonized layer) whose volume is several tens of times that of the dry coating layer may be formed. The insulating layer may alleviate or block thermal propagation and gas emission in the plurality of battery cells 121_1 to 121_16 and allow directional exhaust of the battery cell assembly 120.

The foaming mesh 128 may include a net structure. The net structure may be composed of vertices (peaks) and line segments (edges) connecting the vertices (peaks). The vertices of the net structure may be knots or connecting points. The foaming mesh 128 may include a generally uniform pattern. The pattern may include diamonds, squares, hexagons or circles but is not limited thereto.

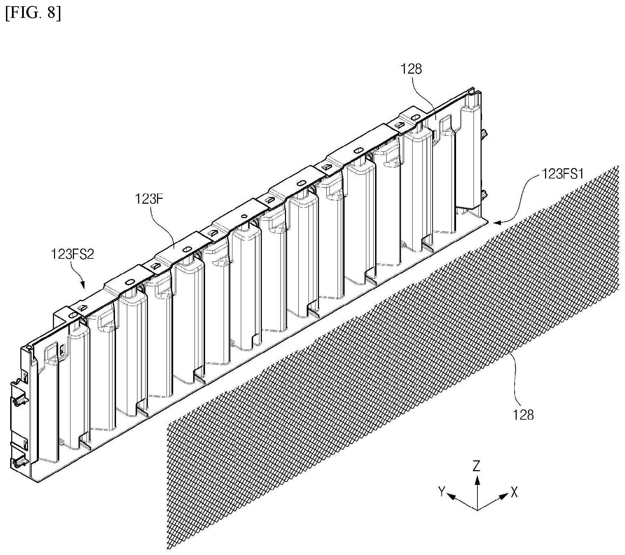

The foaming mesh 128 may have flexibility and elasticity. Accordingly, the foaming mesh 128 may be easily coupled to a first surface 123FS1 having irregularities (see FIG. 8) of the first insulating frame 123F. The first surface 123FS1 (see FIG. 8) may face the plurality of battery cells 121_1 to 121_16. According to embodiments, the foaming mesh 128 may be thermally fused to the insulating frame.

The insulating frame 123F may include slits 123S1 and slits 123S2. The slits 123S1 and the slits 123S2 may be penetrated by electrode leads of corresponding ones of the plurality of battery cells 121_1 to 121_16. Each of the slits 123S1 may be penetrated by the positive electrode leads 121P of corresponding ones of the battery cells 121_1, 121_3, 121_5, 121_7, 121_9, 121_11, 121_13, and 121_15. Each of the slits 123S2 may be penetrated by the negative electrode leads 121N of corresponding ones of the battery cells 121_2, 121_4, 121_6, 121_8, 121_10, 121_12, 121_14, and 121_16.

The electrode leads of each of the plurality of battery cells 121_1 to 121_16 may pass through corresponding ones of the slits 123S1 and the slits 123S2. The positive electrode lead 121P of each of the battery cells 121_1, 121_3, 121_5, 121_7, 121_9, 121_11, 121_13, and 121_15 may pass through a corresponding one of the slits 123S1. The negative electrode lead 121N of each of the battery cells 121_2, 121_4, 121_6, 121_8, 121_10, 121_12, 121_14, and 121_16 may pass through a corresponding one of the slits 123S2.

The foaming mesh 128 may include slits 128S1 and slits 128S2. The slits 128S1 may overlap the slits 123S1 in the Y-axis direction. The slits 128S2 may overlap the slits 123S2 in the Y-axis direction.

The slits 128S1 and the slits 128S2 may be penetrated by electrode leads of corresponding ones of the plurality of battery cells 121_1 to 121_16. Each of the slits 128S1 may be penetrated by the positive electrode leads 121P of corresponding ones of the battery cells 121_1, 121_3, 121_5, 121_7, 121_9, 121_11, 121_13, and 121_15. Each of the slits 128S2 may be penetrated by the negative electrode leads 121N of corresponding ones of the battery cells 121_2, 121_4, 121_6, 121_8, 121_10, 121_12, 121_14, and 121_16.

The electrode leads of each of the plurality of battery cells 121_1 to 121_16 may pass through corresponding ones of the slits 128S1 and the slits 128S2. The positive electrode lead 121P of each of the battery cells 121_1, 121_3, 121_5, 121_7, 121_9, 121_11, 121_13, and 121_15 may pass through a corresponding one of the slits 128S1. The negative electrode lead 121N of each of the battery cells 121_2, 121_4, 121_6, 121_8, 121_10, 121_12, 121_14, and 121_16 may pass through a corresponding one of the slits 128S2.

According to embodiments, a foaming coating 128M (see FIG. 9) of the foaming mesh 128 forms an insulating layer whose volume increases in a thermal runaway event, thus filling a space between the plurality of battery cells 121_1 to 121_16 and the first bus bar frame 123F. Accordingly, forward movement of a high-temperature gas discharged from the plurality of battery cells 121_1 to 121_16 in the thermal runaway event may be prevented, and directional venting of the battery cell assembly 120 may be achieved.

The battery cell assembly 120 may further include an additional foaming mesh between the plurality of battery cells 121_1 to 121_16 and the second bus bar frame 125F. The additional foaming mesh is substantially the same as the foaming mesh 128, except that the additional foaming mesh is coupled to the second bus bar frame 125.

The battery cell assembly 120 may include a fire-resistant sheet and a top cover on the plurality of battery cells 121_1 to 121_16. The fire-resistant sheet may be interposed between the plurality of battery cells 121_1 to 121_16 and the top cover. The top cover may have higher rigidity than the fire-resistant sheet and thus protect the plurality of battery cells 121_1 to 121_16.

The fire-resistant sheet may include, for example, a fire-resistant material such as mica. the fire-resistant sheet includes a plurality of perforated guides. The plurality of perforated guides may be formed by tooling or the like, have weaker mechanical strength than other parts of the fire-resistant sheet, and thus be broken relatively easily.

When a thermal runaway event occurs, a part of the fire-resistant sheet on which the plurality of perforated guides are formed may be easily broken due to the plurality of perforated guides, and thus, a high-temperature gas generated from the plurality of battery cells 121_1 to 121_16 may be discharged through exhaust holes of the top cover.

### (Second Embodiment)

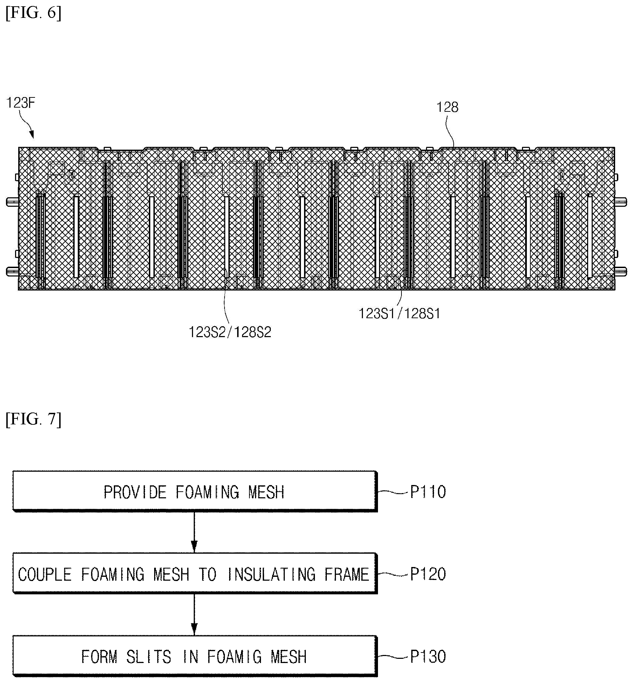

FIG. 7 is a flowchart of a method of providing a battery cell assembly according to embodiments.

FIG. 8 is a perspective view for describing a method of providing a battery cell assembly according to embodiments.

FIG. 9 is a cross-sectional view of a foaming mesh according to embodiments.

Referring to FIGS. 6 to 9, in P110, the foaming mesh 128 may be provided. The providing of the foaming mesh 128 may include immersing a mesh 128M in a foaming material or spraying the foaming material onto the mesh 128M. The foaming coating 128C may be applied to a surface of the mesh 128M by processes such as dipping and spraying. After dipping and spraying, the foaming mesh 128 may be additionally dried.

Next, in P120, the foaming mesh 128 may be coupled to the insulating frame 123F. The insulating frame 123F may be coupled to the foaming mesh 128 by a thermal fusion process. During the thermal fusion process, the insulating frame 123F or the foaming mesh 128 may melt and coagulate again and thus the insulating frame 123F and the foaming mesh 128 may be fixed to each other.

The foaming mesh 128 may be coupled to the first surface 123FS1 of the insulating frame 123F. The insulating frame 123F may further include a second surface 123FS2 opposite to the first surface 123FS1.

Thereafter, in P130, the slits 128S1 and 128S2 may be formed in the foaming mesh 128. The slits 128S1 and 128S2 may be formed by mechanical tooling. The formation of the slits 128S1 and 128S2 in P130 may be performed before P110 or P120.

Next, referring to FIGS. 1 to 6, the battery assembly 120 may be provided. The providing of the battery assembly 120 may include stacking the plurality of battery cells 121_1 to 121_16 and the plurality of pads 122, coupling the first and second bus bar frames 123F and 125F on which the first and second integrated circuits 123C and 125C are mounted to the plurality of battery cells 121_1 to 121_16, welding the positive electrode leads 121P and the negative electrode leads 121N of the plurality of battery cells 121_1 to 121_16 and the first and second bus bars 123P and 123N together, coupling the first and second integrated circuits 123C and 125C and the positive electrode leads 121P and the negative electrode leads 121N of the plurality of battery cells 121_1 to 121_16, coupling the first and second insulating covers 124 and 126 to the first and second bus bar frames 123F and 125F, and connecting the first and second integrated circuits 123C and 125C to the FFC assembly 127.

### (Third Embodiment)

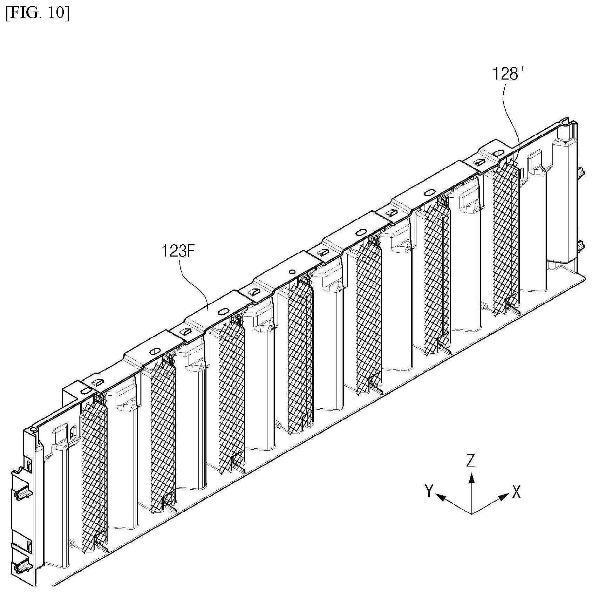

FIG. 10 is a perspective view of an insulating frame 123F and foaming meshes 128' according to embodiments.

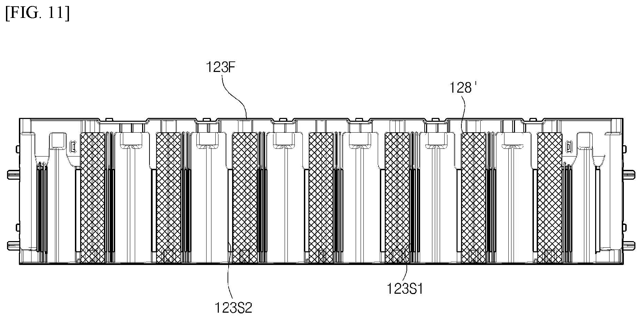

FIG. 11 is a rear view of the insulating frame 123F and the foaming meshes 128' according to embodiments.

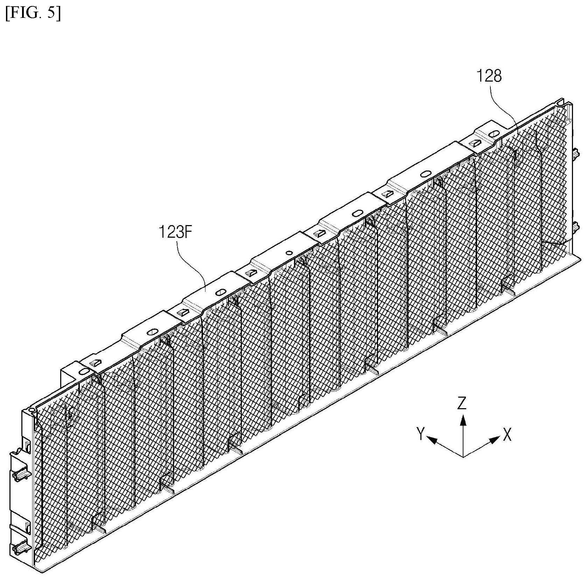

Referring to FIGS. 10 and 11, the foaming meshes 128' may be smaller in size than the foaming meshes 128 of FIGS. 5 and 6. Each of the foaming meshes 128' may partially cover the insulating frame 123F. The foaming meshes 128' are substantially the same as the foaming meshes 128 (see FIG. 5) except for a size thereof and a position thereof relative to the insulating frame 123F.

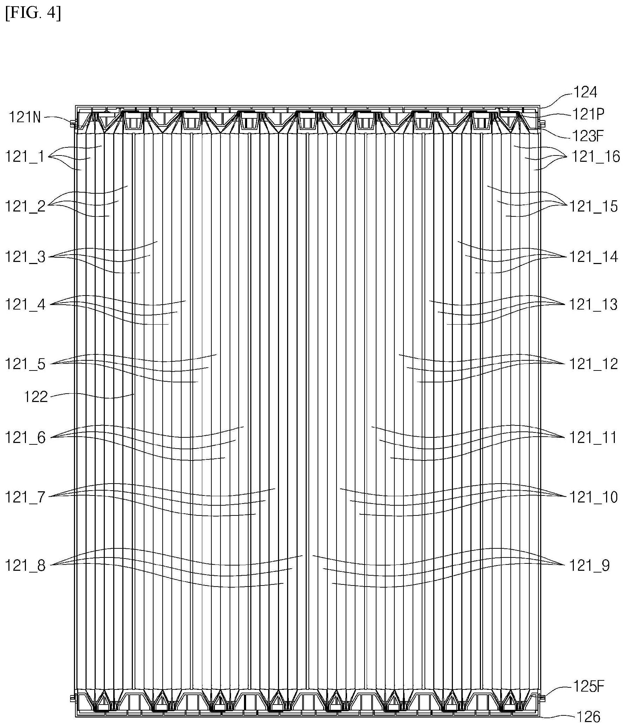

According to embodiments, the foaming meshes 128' may be coupled to portions of the insulating frame 123F overlapping the plurality of pads 122 (see FIG. 4) in the Y-axis direction. When assembled to the battery cell assembly, the foaming meshes 128' may overlap the plurality of pads 122 (see FIG. 4) in the Y-axis direction. Unlike the foaming meshes 128 of FIGS. 5 and 6 overlapping each of the plurality of battery cells 121_1 to 121_16 (see FIG. 4) in the Y-axis direction, the foaming meshes 128' may overlap some of the plurality of battery cells 121_1 to 121_16 (see FIG. 4) in the Y-axis direction.

Each of the foaming meshes 128' may not overlap the plurality of battery cells 121_1 to 121_16 (see FIG. 4) in the Y-axis direction. Each of the foaming meshes 128' may overlap only the plurality of pads 122 (see FIG. 4) in the Y-axis direction.

According to embodiments, each of the foaming meshes 128' may be interposed between the slits 123S1 and the slits 123S2 and thus may not include the first and second slits 128S1 and 128S2 (see FIG. 6).

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell assembly comprising:
a plurality of battery cells arranged in a first direction and each including an electrode lead;
an integrated circuit assembly coupled to the electrode lead of each of the plurality of battery cells; and
a foaming mesh interposed between the integrated circuit assembly and the plurality of battery cells.

2. The battery cell assembly of claim 1, wherein the foaming mesh includes a mesh and a foaming coating applied to the mesh.

3. The battery cell assembly of claim 2, wherein the foaming coating is configured to form an insulating layer when a thermal runaway event occurs in the plurality of battery cells.

4. The battery cell assembly of claim 1, wherein the integrated circuit assembly includes an insulating frame and an integrated circuit mounted on the insulating frame, and
the foaming mesh is coupled to the insulating frame.

5. The battery cell assembly of claim 4, wherein the foaming mesh is thermally fused to the insulating frame.

6. The battery cell assembly of claim 4, wherein the insulating frame includes a first surface facing the plurality of battery cells, and
the foaming mesh is coupled to the first surface.

7. The battery cell assembly of claim 4, wherein the insulating frame includes a plurality of first slits, and
the foaming mesh includes second slits overlapping the plurality of first slits.

8. The battery cell assembly of claim 7, wherein the electrode lead of each of the plurality of battery cells passes through a corresponding one of the plurality of first and second slits.

9. The battery cell assembly of claim 1, further comprising pads interposed between the plurality of battery cells,
wherein the foaming mesh overlaps the pads in a second direction perpendicular to the first direction.

10. The battery cell assembly of claim 9, wherein the foaming mesh overlaps some of the plurality of battery cells in the second direction.

11. The battery cell assembly of claim 9, wherein the foaming mesh overlaps each of the plurality of battery cells in the second direction.

12. A battery cell assembly comprising:
a plurality of battery cells arranged in a first direction and each including an electrode lead;
an integrated circuit assembly coupled to the electrode lead of each of the plurality of battery cells; and
a plurality of foaming meshes interposed between the integrated circuit assembly and the plurality of battery cells.
